# FASCICULE DE BREVET EUROPEEN

(11) **EP 1 591 866 B1**
(45) Date de publication et mention de la délivrance du brevet: **14.11.2007**
(21) Numéro de dépôt: 05103280.3
(22) Date de dépôt: 22.04.2005
(51) Int. Cl.: G06F 21/02

(54) **Contrôle de l'exécution d'un algorithme par un circuit intégré**
Kontrolle der Ausführung eines Algorithmuses durch eine integrierte Schaltung
Control of execution of an algorithm by an integrated circuit

(30) Priorité: 27.04.2004 FR 0450798
(43) Date de publication de la demande: 02.11.2005
(73) Titulaire: ST MICROELECTRONICS S.A., 92120 Montrouge (FR)
(72) Inventeur: Llardet, Pierre-Yvan, 13790, Peynier (FR); Teglia, Yannick, 13011, Marseille (FR)
(74) Mandataire: de Beaumont, Michel

(56) Documents cités:
- DE-A- 10 042 234
- DE-A- 10 136 335

## Description

La présente invention concerne, de façon générale, l'exécution de fonctions de calcul par un circuit intégré. L'invention concerne plus particulièrement le contrôle de l'exécution d'un algorithme, notamment de cryptographie, contre des attaques par injection de fautes visant à découvrir le secret (généralement une clé) manipulé par cet algorithme.

Une attaque par injection de fautes consiste à introduire une faute dans le programme exécuté (par exemple, faire sauter le compteur programme) ou sur les données manipulées afin d'obtenir un résultat erroné. Cette injection de fautes est répétée plusieurs fois et finit par permettre à l'attaquant de découvrir la quantité secrète manipulée. Par exemple, pour des algorithmes de cryptographie (DSA, RSA, DES, AES, etc.), les clés secrètes peuvent être découvertes grâce à un piratage provoquant des sauts d'instructions.

Une technique connue pour protéger un programme contre des injections de fautes consiste à calculer une signature (application d'un algorithme de chiffrement à au moins une partie du code logiciel) lors de l'installation ou de l'écriture du programme. Cette signature est ensuite stockée dans ou hors du circuit intégré exécutant le programme. Puis, lors de l'exécution du code logiciel, le système d'exploitation recalcule une signature sur la base du même algorithme que celui ayant servi à la génération de la signature initiale. On compare alors la signature courante avec la signature prédéterminée. Une divergence entre ces deux signatures signifie que le programme stocké a été modifié et permet donc d'identifier une attaque potentielle, volontaire ou accidentelle. Un exemple d'un tel procédé de vérification d'intégrité est décrit dans le brevet américain n° 5 442 645.

Une telle solution protège le programme, mais pas les données et, notamment, pas les clés secrètes manipulées. De plus, des attaques par injection de fautes telles que décrites dans le document "DFA of DES with single injection faults" de M. Witterman dans IBM workshop on security - April 2000, restent efficaces sur des algorithmes tels que le DES.

Pour protéger les données, une technique connue consiste à ajouter une fonction C de calcul d'un code correcteur d'erreurs à la donnée D en cours de traitement. Avant de lancer une opération donnée O du programme, on applique cette fonction de calcul à la donnée à traiter pour obtenir un code initial C(D). A l'issue du traitement de la donnée par l'opération, on applique la même fonction C sur la donnée résultat O(D) et on applique l'opération O du programme au code initial C(D). Les données n'ont pas été modifiées en cours de traitement si les deux résultats C(O(D)) et O(C(D)) sont identiques.

Un inconvénient de cette technique est qu'elle n'est pas applicable à n'importe quelle opération. En particulier, elle requiert que l'opération manipulant les données et que la fonction de calcul du code respecte, pour une donnée valide, la condition C(O(D)) = O(C(D)).

Une autre solution connue pour contrôler l'exécution d'un programme est d'effectuer certaines opérations en double, de façon à disposer d'une redondance sur les données pour vérifier la cohérence entre les deux exécutions. Un inconvénient d'une telle solution est qu'elle requiert soit de doubler le temps d'exécution, soit de doubler les éléments matériels de calcul.

La présente invention vise à pallier les inconvénients des solutions connues de protection contre des injections de fautes dans l'exécution de programmes et, plus particulièrement, à détecter d'éventuelles injections de fautes que ce soit dans le programme ou dans les données.

L'invention vise également à proposer une solution qui soit compatible avec une exécution sur un microcontrôleur de puissance limitée de type carte à puce.

Pour atteindre ces objets ainsi que d'autres, la présente invention prévoit un procédé de protection d'un calcul effectué par plusieurs cellules matérielles successivement d'un même élément électronique contre d'éventuelles injections de fautes, consistant à :
démarrer une première exécution du calcul ;
démarrer une deuxième exécution du même calcul une fois que la première exécution a libéré une première cellule et se poursuit dans une deuxième ;
synchroniser les exécutions pour que la deuxième n'utilise une cellule que lorsque la première est passée à la cellule suivante ; et
vérifier l'identité entre les deux résultats en fin d'exécution des deux calculs.

Selon un mode de mise en oeuvre de la présente invention, un élément de mémorisation temporaire de stockage de résultats intermédiaires fournis par lesdites cellules est affecté à chaque exécution.

Selon un mode de mise en oeuvre de la présente invention, au moins un élément de mémorisation temporaire est affecté à chaque cellule matérielle pour stocker une valeur à traiter, le résultat de chaque cellule étant stocké dans un élément de mémorisation constituant, de préférence, l'élément d'entrée de la cellule suivante.

Selon un mode de mise en oeuvre de la présente invention, un traitement d'erreur est mis en oeuvre si les deux résultats en fin d'exécution sont différents l'un de l'autre.

Selon un mode de mise en oeuvre de la présente invention, le procédé est appliqué à un algorithme de type DES.

L'invention prévoit également un microcontrôleur comportant des moyens pour exécuter le procédé et une carte à puce comprenant un tel microcontrôleur.

Ces objets, caractéristiques et avantages, ainsi que d'autres de la présente invention seront exposés en détail dans la description suivante de modes de mise en oeuvre particuliers faite à titre non limitatif.

Par souci de clarté, seuls les éléments et étapes nécessaires à la compréhension de l'invention seront décrits par la suite. En particulier, les opérateurs ou instructions concernés par la mise en oeuvre de l'invention n'ont pas été détaillés, l'invention s'appliquant quel que soit le type d'opérateur ou d'instruction. De plus, tous les constituants nécessaires à l'exécution d'un programme, que ce soit pour une mise en oeuvre logicielle ou au moyen d'une machine d'états en logique câblée, n'ont pas été détaillés, leur réalisation faisant appel à des éléments classiques.

Une caractéristique de la présente invention est d'exécuter deux fois le même calcul avec la ou les mêmes données en utilisant, dès qu'elle est libérée par une première exécution, une même cellule matérielle pour la deuxième exécution. En d'autres termes, les deux exécutions prévues par l'invention sont temporellement décalées d'une cellule.

L'invention tire profit du fait que les algorithmes qui manipulent des données, et notamment les algorithmes de cryptographie, utilisent successivement plusieurs cellules matérielles qu'ils libèrent au fur et à mesure de l'exécution de l'algorithme.

Par cellule matérielle, on entend au sens de la présente invention, une opération ou fonction câblée, c'est-à-dire utilisant des composants dédiés. Cela suppose également que les valeurs d'entrée-sortie de cette opération ou fonction sont stockables, par exemple dans un registre temporaire.

Selon un mode de mise en oeuvre préféré de l'invention, au moins un premier élément de mémorisation temporaire (par exemple, un ou plusieurs registres) est affecté à chacune des exécutions pour stocker, notamment, des résultats intermédiaires. Si nécessaire, un élément de mémorisation est affecté à chaque résultat pour permettre la comparaison. En variante, le premier élément de chaque exécution stocke son résultat. Le nombre d'éléments de mémorisation est à adapter à l'algorithme et dépend, en particulier, du besoin éventuel de prendre en compte un ou plusieurs résultats intermédiaires précédents. En pratique, la mise en oeuvre de l'invention double le nombre d'éléments de mémorisation d'états intermédiaires par rapport à une exécution classique de l'algorithme considéré. Par conséquent, plus ce nombre est faible (idéalement un seul), moins la mise en oeuvre de l'invention est gourmande en ressources.

En désignant par F un algorithme exécutant successivement les n opérations f₁, ..., fᵢ, ..., fₙ (i désignant le rang de l'opération dans une première exécution), par R1 et R2 deux registres (ou ensembles de registres) affectés aux résultats intermédiaires respectifs de deux exécutions de l'algorithme, et par Dᵢₙᵢₜ les données à traiter qui doivent conduirent à des données D_{fin} en fin de traitement, la mise en oeuvre de l'invention peut s'écrire de la façon suivante.

Pour simplifier, on assimile chaque opération f à une période temporelle tⱼ. En fait, les durées respectives des opérations f peuvent être différentes les unes des autres, mais cela n'a pas d'incidence pourvu que la même opération ne soit pas appliquée simultanément aux contenus respectifs des deux registres R1 et R2. On suppose que les registres R1 et R2 contiennent les données en cours de traitement à chaque fin d'opération. On désignera R1ⱼ et R2ⱼ les contenus respectifs des registres R1 et R2 à l'issue de la période j. En fait, en raison du décalage d'exécution, les rangs i et j sont égaux pour la première exécution (R1).

Initialement (avant la période t₁), au moins le registre R1 contient la valeur Dᵢₙᵢₜ.

Pendant la période t₁, la première opération f₁ est appliquée aux données Dᵢₙᵢₜ contenues dans le registre R1 et, en fin de période t₁, le registre R1 contient des données R1₁ = f₁(Dᵢₙᵢₜ). Pendant cette période t₁, aucun traitement n'est appliqué au registre R2, si ce n'est le cas échéant son chargement par les données Dᵢₙᵢₜ. Par conséquent, R2₁ = Dᵢₙᵢₜ.

Pendant la période t₂, la deuxième opération f₂ est appliquée aux données du registre R1 qui, en fin de période, contient les données R1₂ = f₂(R1₁). Parallèlement, la première opération f₁ est appliquée aux données initiales Dᵢₙᵢₜ contenues dans le registre R2 qui, en fin de période t₂, contient alors les données R2₂ = f₁(Dᵢₙᵢₜ).

Par la suite, à la fin de chaque phase temporelle tⱼ, les registres R1 et R2 contiennent respectivement les valeurs R1ⱼ = fⱼ(R1ⱼ₋₁) et R2ⱼ = fⱼ₋₁(R2ⱼ₋₁).

A l'issue de la période tₙ, la première exécution est terminée et le registre R1 contient les données R1ₙ = fₙ(R1ₙ₋₁). Si l'exécution s'est déroulée correctement, R1ₙ = D_{fin}. Côté registre R2, l'avant dernière opération fₙ₋₁ est appliquée pendant la période tₙ pour conduire aux données R2ₙ = fₙ₋₁(R2ₙ₋₁).

La mise en oeuvre de l'invention requiert au moins une période t supplémentaire pour terminer la deuxième exécution. A l'issue de cette période supplémentaire tₙ₊₁, le registre R2 contient les données R2ₙ₊₁ = fₙ(R2ₙ). Là encore, si l'exécution s'est déroulée correctement, R2ₙ₊₁ = D_{fin}.

Il suffit alors à l'issue de la période tₙ₊₁ de comparer les contenus respectifs des registres R1 et R2. En cas d'identité, on peut en conclure que le résultat est fiable (que les exécutions n'ont pas été perturbées). Dans le cas contraire, cela signifie qu'une attaque (ou une erreur accidentelle) s'est produite.

Un exemple de mise en oeuvre de l'invention sera décrit par la suite en relation avec un exemple particulier d'application à l'algorithme DES. Toutefois, l'invention s'applique plus généralement à tout algorithme utilisant plusieurs cellules matérielles successivement. Par exemple, l'invention s'applique également à l'algorithme AES.

Un algorithme de type DES se décompose en tours de chiffrement (ROUND) dans lesquels sont manipulées des données et des clés. Cet algorithme est décrit, par exemple dans le document "Federal Information Processing Standards Publication" 46-2, 30 décembre 1993.

Chaque tour peut être décomposé de la façon suivante en notant i le rang du tour, K la clé, R la moitié droite du mot de donnée à traiter, L la moitié gauche du mot de donnée, et T la variable en cours de traitement.
T = E(R), où E désigne l'expansion de la donnée R sur la totalité des bits du mot ;
T = T xor K(i), où xor désigne la fonction OU-Exclusif et K(i) la clé du tour i ;
T = Sbox(T), où Sbox désigne une table de substitution ;
T = P(T), où P désigne une permutation ;
T = T xor L ;
L = R ; et
R = T.

D'un point de vue temporel, l'exécution d'un tour de rang i peut être représentée comme dans le tableau 1 ci-dessous, où t désigne le cycle d'horloge.

| TABLEAU 1 | | | | |
|---|---|---|---|---|
| t | Opération | Contenu des registres | | |
| | | registre temporaire | R | L |
| 0 | | Rᵢ₋₁ | Rᵢ₋₁ | Lᵢ₋₁ |
| 1 | T=E(Rᵢ₋₁) | E(Rᵢ₋₁) | | |
| 2 | T=T xor K(i) | E(Rᵢ₋₁) xor K(i) | | |
| 3 | T=Sbox (T) | Sbox (E(Rᵢ₋₁) xor K(i)) | | |
| 4 | T=P (T) | P (Sbox (E(Rᵢ₋₁) xor K(i))) | | |
| 5 | T=T xor L | P (Sbox (E(Rᵢ₋₁) xor K(i))) xor L | | |
| 6 | L=R | | | Rᵢ₋₁ |
| 7 | R=T | | P(Sbox(E(Rᵢ₋₁) xor K(i))) xor L | |

Le tableau 2 ci-après illustre la mise en oeuvre de l'invention sur un tour de chiffrement de l'algorithme DES. Les mêmes notations que précédemment ont été utilisées en les affectant d'un 1 pour la première exécution et d'un 2 pour la deuxième exécution.

| TABLEAU 2 | | | | | | |
|---|---|---|---|---|---|---|
| Cycle | Exécution 1 | Exécution 2 | Contenu des registres | | | |
| | Opération | Opération | T1 | T2 | R | L |
| 0 | | | Rᵢ₋₁ | Rᵢ₋₁ | Rᵢ₋₁ | Lᵢ₋₁ |
| 1 | T1=E (T1) | | E(Rᵢ₋₁) | | | |
| 2 | T1=T1 xor K(i) | T2=E(T2) | E(Rᵢ₋₁) xor K(i) | E(Rᵢ₋₁) | | |
| 3 | T1=Sbox(T1) | T2=T2 xor K(i) | Sbox(E(Rᵢ₋₁) xor K(i)) | E(Rᵢ₋₁) xor K(i) | | |
| 4 | T1=P(T1) | T2=Sbox(T2) | P(Sbox(E(Rᵢ₋₁) xor K(i))) | Sbox(E(Rᵢ₋₁) xorK(i)) | | |
| 5 | Tl=T1 xor L | T2=P(T2) | P(Sbox(E(Rᵢ₋₁) xor K(i))) xor L | P(Sbox(E(Rᵢ₋₁) xor K(i))) | | |
| 6 | | T2=T2 xor L | | P(Sbox(E(Rᵢ₋₁) xorK(i))) xor L | | |
| 7 | T2=T1 ? | | | | | |
| 8 | L=R | | | | | Rᵢ₋₁ |
| 9 | R=T1 | | | | P (Sbox (E (Rᵢ₋₁) xor K(i))) xor L | |

Par rapport à l'exécution classique, on teste l'identité des contenus des registres T1 et T2 avant de mettre à jour les registres R et L. Comme on le voit, deux cycles supplémentaires sont nécessaires (un pour le test et un pour supporter le décalage). Dans le tableau 2, on suppose que le test du cycle 7 valide l'exécution. Dans le cas contraire, les cycles 8 et 9 ne sont pas exécutés.

En variante, le test n'est pas effectué à la fin de chaque tour i, mais en fin d'exécution de tous les tours. Dans ce cas, on limite le nombre de cycles supplémentaires à n+1 (n étant le nombre de tours) au lieu de 2n.

On notera que la mise en oeuvre de l'invention est compatible avec un algorithme utilisant plus d'une fois une même cellule. Si cette utilisation est suffisamment espacée dans le temps, cela ne requiert pas de précaution particulière. Toutefois, si cette utilisation est proche, par exemple si une même cellule est utilisée deux fois successivement, on considère alors les deux utilisations comme une seule et on attend que cette cellule soit libérée. En variante, on utilise cette cellule une première fois pour la première exécution. Puis, on attend qu'elle ait été utilisée par la deuxième exécution avant de la réutiliser pour la première. Chaque exécution est alors temporairement mise en attente pendant que la cellule est utilisée pour l'autre. Le choix du mode de mise en oeuvre dépend de la durée d'exécution de la cellule par rapport aux cellules précédente ou suivante. En particulier, l'utiliser deux fois successivement pour une même exécution ne rallonge pas le procédé si l'étape précédente est à elle seule deux fois plus longue (la donnée de la deuxième exécution ne serait alors de toute façon pas prête avant la fin des deux utilisations pour la première exécution).

Suite à la détection de deux résultats différents, n'importe quelle action classique peut être entreprise. Par exemple, le résultat final n'est pas pris en compte pour le reste de l'application. Selon un autre exemple, l'élément électronique, par exemple la carte à puce, est bloqué.

Un avantage de la présente invention est que sa mise en oeuvre ne requiert que peu de ressources supplémentaires (temporelles ou matérielles) par rapport à une exécution non protégée. En effet, l'allongement de la durée totale, lié à la mise en oeuvre de l'invention par rapport à deux exécutions en parallèle, est limité au temps d'exécution d'une seule cellule (celle qui prend le plus de temps). Par ailleurs, le surcroît d'éléments matériels, par rapport à deux exécutions successives, est au plus d'un élément de mémorisation des résultats intermédiaires de la deuxième exécution (la mémorisation des résultats des deux exécutions pour comparaison étant déjà présente pour deux exécutions successives).

Bien entendu la présente invention est susceptible de diverses variantes et modifications qui apparaîtront à l'homme de l'art. En particulier, le découpage de l'algorithme (le choix des cellules matérielles) est à la portée de l'homme du métier en fonction de l'application et à partir des indications fonctionnelles données ci-dessus. De plus, la mise en oeuvre pratique de l'invention par des moyens logiciels pour exécuter le procédé de vérification et, notamment, gérer les registres et le séquencement des opérations est à la portée de l'homme du métier et fait appel à des notions de programmation habituelles.

## Revendications

1. Procédé de protection d'un calcul effectué par plusieurs cellules matérielles successivement d'un même élément électronique contre d'éventuelles injections de fautes, **caractérisé en ce qu'**il consiste à :
démarrer une première exécution du calcul ;
démarrer une deuxième exécution du même calcul une fois que la première exécution a libéré une première cellule et se poursuit dans une deuxième ;
synchroniser les exécutions pour que la deuxième n'utilise une cellule que lorsque la première est passée à la cellule suivante ; et
vérifier l'identité entre les deux résultats en fin d'exécution des deux calculs.

2. Procédé selon la revendication 1, dans lequel un élément de mémorisation temporaire de stockage de résultats intermédiaires fournis par lesdites cellules est affecté à chaque exécution.

3. Procédé selon la revendication 1, dans lequel au moins un élément de mémorisation temporaire est affecté à chaque cellule matérielle pour stocker une valeur à traiter, le résultat de chaque cellule étant stocké dans un élément de mémorisation constituant, de préférence, l'élément d'entrée de la cellule suivante.

4. Procédé selon l'une quelconque des revendications 1 à 3, dans lequel un traitement d'erreur est mis en oeuvre si les deux résultats en fin d'exécution sont différents l'un de l'autre.

5. Procédé selon l'une quelconque des revendications 1 à 4, appliqué à un algorithme de type DES.

6. Microcontrôleur, **caractérisé en ce qu'**il comporte des moyens pour exécuter le procédé selon l'une quelconque des revendications 1 à 5.

7. Carte à puce comprenant un microcontrôleur selon la revendication 6.

## Claims

1. A method for protecting against possible fault injections a calculation successively performed by several hardware cells of a same electronic element, **characterized in that** it consists of:
starting a first execution of the calculation;
starting a second execution of the same calculation once the first execution has freed a first cell and goes on in a second cell;
synchronizing the executions so that the second execution uses a cell only when the first execution has passed to the next cell; and
verifying the identity between the two results at the end of the execution of the two calculations.

2. The method of claim 1, wherein a temporary stirage element for storing intermediary results provided by said cells is assigned to each execution.

3. The method of claim 1, wherein at least one temporary storage element is assigned to each hardware cell to store a value to be processed, the result of each cell being stored in a storage element forming, preferably, the input element of the next cell.

4. The method of any of claims 1 to 3, wherein an error processing is implemented if the two results at the end of the execution are different from each other.

5. The method of any of claims 1 to 4, wherein the method is applied to a DES-type algorithm.

6. A microcontroller **characterized in that** it comprises means for executing the method of any of claims 1 to 5.

7. A smart card comprising the microcontroller of claim 6.

## Patentansprüche

1. Ein Verfahren zum Schutz einer Berechnung, die sukzessiv durch mehrere Hardware-Zellen eines gleichen elektronischen Elements durchgeführt wird, gegenüber möglicher Fehlereinführungen, **dadurch gekennzeichnet, dass** das Verfahren aus Folgendem besteht:
Starten einer ersten Ausführung der Berechnung;
Starten einer zweiten Ausführung der gleichen Berechnung sobald die erste Ausführung eine erste Zelle freigegeben hat und in einer zweiten Zelle weitergeht;
Synchronisieren der Ausführungen, so dass die zweite Ausführung eine Zelle nur nutzt, wenn die erste Ausführung zu der nächsten Zelle übergeben hat; und
Verifizieren der Identität zwischen den zwei Ergebnissen am Ende der Ausführung der zwei Berechnungen.

2. Verfahren nach Anspruch 1, wobei ein temporäres Speicherelement zum Speichern von Zwischenergebnissen die durch die Zellen geliefert werden, jeder Ausführung zugewiesen ist.

3. Verfahren nach Anspruch 1, wobei wenigstens ein temporäres Speicherelement jeder Hardware-Zelle zum Speichern eines zu verarbeitenden Werts zugewiesen ist, wobei das Ergebnis jeder Zelle in einem Speicherelement gespeichert wird, das vorzugsweise das Eingangselement der nächsten Zelle bildet.

4. Verfahren nach irgendeinem der Ansprüche 1 bis 3, wobei eine Fehlerverarbeitung implementiert wird, falls die zwei Ergebnisse an dem Ende der Ausführung voneinander unterschiedlich sind.

5. Verfahren nach irgendeinem der Ansprüche 1 bis 4, wobei das Verfahren auf einen DES-artigen Algorithmus angewendet wird.

6. Ein Mikro-Controller, der **dadurch gekennzeichnet ist, dass** er Mittel aufweist zum Ausführen des Verfahrens nach irgendeinem der Ansprüche 1 bis 5.

7. Eine Smart-Card bzw. Chipkarte, die den Mikro-Controller nach Anspruch 6 aufweist.
